# EUROPEAN PATENT SPECIFICATION

(11) **EP 3 283 355 B1**
(45) Date of publication and mention of the grant of the patent: **09.10.2019**
(21) Application number: 16735739.1
(22) Date of filing: 10.06.2016
(51) Int. Cl.: B62D 33/02, B60J 5/04

(54) **MODULAR LOCKING SYSTEM**
MODULARES VERRIEGELUNGSSYSTEM
SYSTÈME DE VERROUILLAGE MODULAIRE

(30) Priority: 11.06.2015 TR 201507201
(43) Date of publication of application: 21.02.2018
(73) Proprietor: Tirsan Treyler Sanayi Ve Ticaret Anonim Sirketi, 54010 Arifiye/Sakarya (TR)
(72) Inventor: KARAMANLI, Armagan Fatih, 54010 Arifiye/Sakarya (TR); KACAR, Batuhan Furkan, 54010 Arifiye/Sakarya (TR); TOPCU, Ilhan, 54010 Arifiye/Sakarya (TR)
(74) Representative: Yamankaradeniz, Kemal
(86) International application number: PCT/TR2016/050178
(87) International publication number: WO 2016/200354

(56) References cited:
- EP-A1- 1 145 938
- DE-U1-202008 010 165
- DE-U1-202009 001 986
- DE-U1-202012 000 928
- TR-U- 201 203 608

## Description

### Technical Field

The present invention relates to a modular locking system for common use on front, middle and rear post assemblies of trailers, semi-trailers and trucks that are used for road haulage, eliminating post geometry differences between trailers with or without side doors.

### Background of the Invention

In the current state of the art, door lock striker is riveted to the post to eliminate differences between semi-trailers with or without side doors. However, in such cases door lock striker does not create a form bond with the post. This causes strength problems.

In another similar practice, door lock strikers are welded to posts. However, in such cases front and rear posts vary depending on whether the trailer is fitted with side doors or not, increasing stocking costs. Other problems experienced in the current state of the art are as follows;
- Customers may randomly order their trailers or semi-trailers with or without side doors.
- In the current state of the art, door lock strikers are welded to front and rear posts and thus front or rear posts vary depending on whether the trailer is fitted with side doors or not. A side door brace is not used if the trailer is not fitted with side doors.
- Diversity caused by this fact increases stocking costs and requires additional stocking space.
- Since strikers are secured by welding, welding debris is found in front and rear post assemblies.
- This creates additional labor costs to remove the debris following completion of welding operations and causes heat damage on post assemblies.
- Welding damages cause thermal stress, deformation, and surface undulations on post assemblies.
- These problems complicate the manufacturing process of post assemblies increasing manufacturing costs and reduce service life due to thermal stress.

There is no remedy to these problems for vehicles that are currently available at the market.

A literature screening revealed similar patent applications related to side door lock assemblies of front, middle and rear post assemblies of trailers, semi-trailers and trucks that are used for road haulage.

Utility model bearing application number TR2013/15076 relates to a middle post locking system on trailers, semi-trailers and trucks that are used for road haulage, fitted with a roof raising system, that helps the weight of the load to be supported by side posts located between the platform and the roof when the truck is on the move and particularly during cornering, preventing up and down movement of the upper part of the side post, inserted into the side post to extend and contract the length of the side post and to allow the side post to move up and down, and allows the side post to lock at a desired level.

Utility model bearing application number TR2012/03608 relates to a mortise locking system to allow side doors on road cargo carriers to lock into lock housings on corner posts and middle posts located on each side of trailer/truck bed. DE202009001986U discloses another similar locking system.

In conclusion, improvements are currently being made regarding side door locking components used on front, middle and rear post assemblies of trailers, semi-trailers and trucks that are used for road haulage, thus new structures to eliminate above mentioned disadvantages and provide solutions to current systems are needed.

### Objective of Invention

Present invention relates to a modular locking system for common use on front, middle and rear post assemblies of trailers, semi-trailers and trucks that are used for road haulage, eliminating post geometry differences between trailers with or without side doors, meeting all requirements and eliminating all disadvantages that are explained in the foregoing and introducing additional advantages.

Primary objective of present invention is to ensure common use of components by eliminating post geometry differences between trailers with or without side doors. This way front or rear posts will not be affected from whether the trailer is fitted with side doors or not.

One other objective of present invention is to ensure uncomplicated and safe production by eliminating welding labor.

Another objective of present invention is to reduce unit costs through common use of front and rear posts.

A further objective of present invention is to reduce the need for stocking space both within and outside the premises of the manufacturer by reducing variations between front and rear posts and to facilitate stock management.

Another objective of present invention is to facilitate parts installation and tracing by reducing the number of parts to be tracked.

One other objective of present invention is to provide a sturdy mounting assembly by positioning the side of the post between lock striker components and securing it to the post by creating a form bond by using bolts-nuts or rivets.

A further objective of present invention is to eliminate variations between posts used on trailers with or without side doors and to avoid damages caused on post assemblies by welding process, by removing the process of welding door lock strikers to the posts, Securing side door lock strikers to the post without using welding process also helps save from post manufacturing labor costs.

In order to fulfill above mentioned objectives, the modular locking system that constitutes the subject of present invention incorporates a lock assembly that is secured on the front post and the rear post, constituting the lock housing where the deadbolt, located on the side door is inserted, a lower extension located under the lock assembly, on which the side door rests, and a minimum of one fastener securing the lock assembly, front post, rear post and fitting plate to each other detachably.

### Diagrams Describing Invention

Diagram-1, General perspective view of all components constituting the trailer and modular locking system.
Diagram-2, Detailed view of all components constituting the trailer and modular locking system.
Diagram-3, Detailed view of front post and rear post.
Diagram-4, General perspective view of lock assembly.
Diagram-5, General perspective view of fitting plate.
Diagram-6, General sectional view of the position of fitting plate.

Drawings are not necessarily scaled and details that are not absolutely required to describe present invention might have been omitted. Additionally components that are substantially identical or that have substantially identical functions are referred to under the same number.

### Description of References

**A.** Modular Locking System
**1.** Lock assembly
   **1.1.** Fitting lugs
   **1.2.** Support
   **1.3.** Insertion gap
   **1.4.** Positioning area
   **1.5.** Retaining surface
**2.** Lower extension
**3.** Fitting plate
   **3.1.** Fitting holes
**4.** Fastener
**10.** Vehicle platform
**20.** Side door
**30.** Front post
   **31.** Fitting slots
**40.** Rear post
   **41.** Fitting holes

### Detailed Description of Invention

The present invention relates to a modular locking system (A) for common use on front (30) and rear posts (40) of trailers, semi-trailers and trucks that are used for road haulage, eliminating post geometry differences between trailers with or without side doors.

Diagram-1 depicts a vehicle platform (10) constituting the main body of a trailer used for road haulage, carrying the load as well as the components of the trailer. Preferably two drop doors (20) are located against each other on vehicle platform (10) and secured to front post (30) and rear post (40).

As seen in Diagram-3, multiple front posts (30) are positioned against each other at the front of vehicle platform (10), supporting the roof of the trailer. Multiple fitting slots (31) are provided on front posts (30) in various geometric forms, to secure the lock assembly (1) to front posts (30). Multiple rear posts (40) are positioned against each other at the rear of vehicle platform (10), supporting the roof of the trailer. Multiple fitting holes (41) are provided on rear posts (40) in various geometric forms, to secure the lock assembly (1) to rear posts (40).

As seen in Diagram-4, modular locking system (A), constituting the subject of present invention incorporates a lock assembly (1) that is secured on the front post (30) and rear post (40), serving as lock housing for the deadbolt, located on the side door (20) is inserted. Fitting lugs (1.1) that are located on said modular lock assembly (1) are inserted to fitting slots (31) on the front post (30) and to fitting holes (41) on rear post (40) to secure modular lock assembly (1) to the front post (30) and the rear post (40). Lock assembly (1) incorporates a support (1.2) where the side door (20) rests after it is closed. Length of said support (1.2) can be changed depending on requirements. Insertion gap (1.3) on the fitting lug (1.1) and the positioning area (1.4) are shown clearly in the diagram.

Once the deadbolt is positioned at the positioning area (1.4), it rests on the retaining surface (1.5). Fitting lugs (1.1) are made in different geometric forms.

As seen in Diagram-2, the modular locking (A) system constituting the subject of present invention incorporates a lower extension (2) located under the lock assembly (1) to support the side door (20).

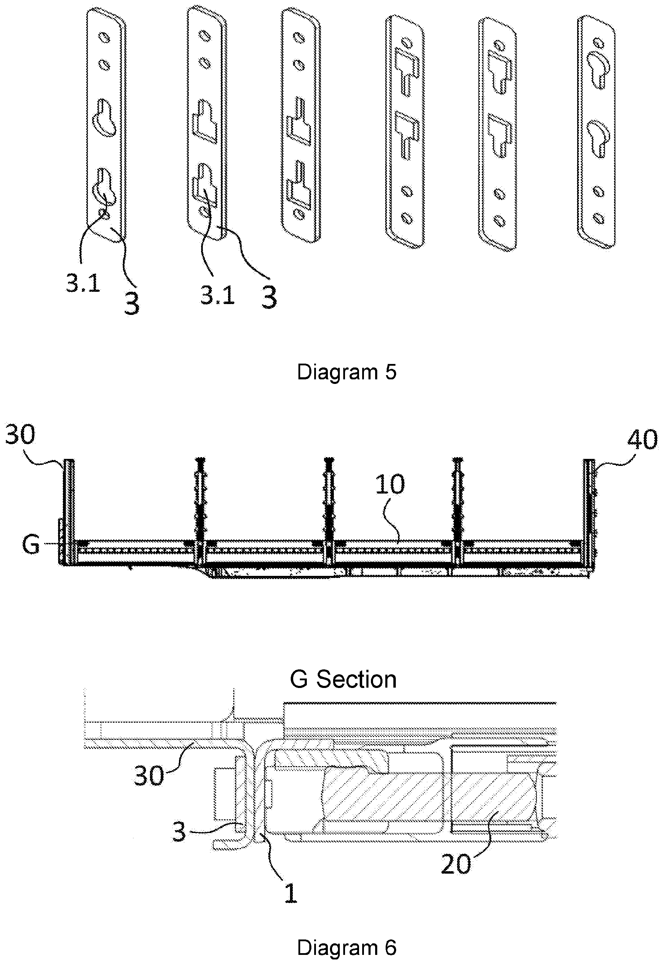

As seen in Diagrams 5 and 6, the modular locking system (A) incorporates a fitting plate (3), located on front post (30) and rear post (40), reinforcing the attachments of front post (30), rear post (40) and side door (20). There are multiple fitting (3.1) holes in various geometric forms on the fitting plate (3), to secure lock assembly (1) to the fitting plate (3).

As seen in Diagram-4, the modular locking system (A) constituting the subject of present invention incorporates a minimum of one fastener (4) securing the front post 30), rear post (40) and fitting plate (3) to each other detachably.

The modular locking system (A) constituting the subject of present invention operates as follows based on the information provided in the foregoing.

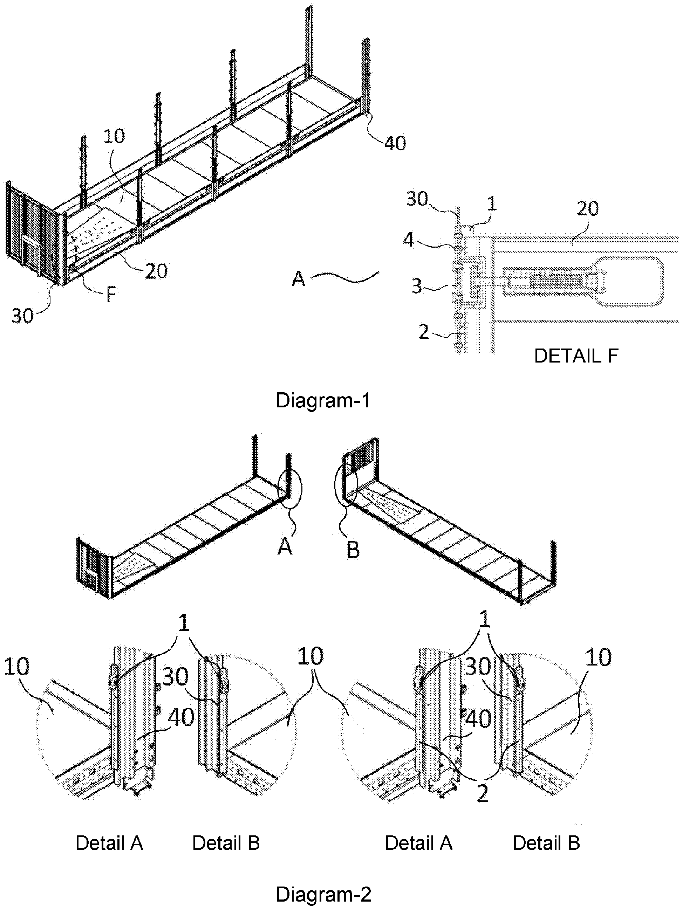

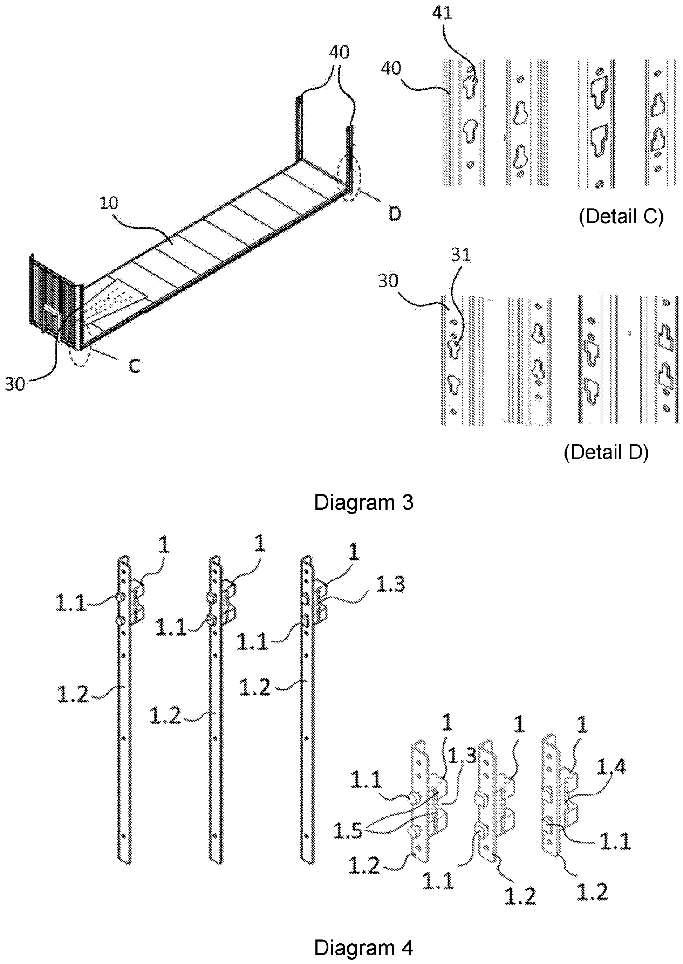

As seen in Diagrams 1 and 2, the modular locking system (A) to be used on trailers, semitrailer and trucks comprises a lock assembly (1), lower extension (2), fitting plate (3) and fastener (4).

Fitting lugs (1.1) located on the lock assembly (1) are inserted through fitting slots (31) in various geometric forms on the front posts (30) and fitting holes (41) in various geometric forms on the rear posts (40) and secured by a fitting plate (3) and fasteners (4) detachably without any welding. Locking assembly (1), which is secured detachably, does not obstruct operation of lower extension (2), fitting plate (3), fastener (4), front posts (30) or rear posts (40). This system does not create any operational difficulties or any hazards regarding load safety, environmental safety or ride safety and offers perfect safety.

## Claims

1. A modular locking system (A) for common use on front posts (30) and rear posts (40) of trailers, semi-trailers and trucks that are used for road haulage, eliminating post geometry differences between trailers with or without side doors, incorporating following features;
• A lock assembly (1) secured to front (30) and rear posts (40), where the deadbolt located on the side door (20) is inserted,
• A lower extension (2) attached to the lock assembly (1), supporting the side door (20),
• A fitting plate (3) located on the front post (30) and the rear post (40), reinforcing the attachments of the front post (30), the rear post (40) and the side door (20),
• A minimum of one fastener (4) securing the lock assembly (1), front post (30), rear post (40) and fitting plate (3) to each other modularly,
the modular locking system (A) **characterized by** comprising
• fitting lugs (1.1) located on the lock assembly (1) that are inserted through fitting slots (31) on the front posts (30) and fitting holes (41) on the rear posts (40) securing modular lock assembly to the front post (30) and the rear post (40).

2. The modular locking system (A) of Claim 1, incorporating a support (1.2) for the side door (20) to rest on after it is closed.

3. The modular locking system (A) of Claim 1, incorporating multiple fitting holes (3.1) in various geometric forms, to secure lock assembly (1) to the fitting plate (3).

4. The modular locking system (A) of Claim 1, incorporating fitting lugs (1.1) in various geometric forms.

## Patentansprüche

1. Modulares Verriegelungssystem (A) für gemeinsamen Einsatz an Vorderpfosten (30) und Hinterpfosten (40) von Anhängern, Sattelaufliegern und Lastwagen, die für Güterkraftverkehr verwendet werden, wobei Unterschiede in der Pfostengeometrie zwischen Anhängern mit oder ohne Seitentüren beseitigt werden, das folgende Merkmale integriert;
• Eine Verriegelungsanordnung (1), die an Vorder- (30) und Hinterpfosten (40) befestigt wird, wobei der auf der Seitentür (20) angeordnete Schließriegel eingerastet wird,
• Eine untere Verlängerung (2), die mit der Verriegelungsanordnung (1) verbunden wird, wobei sie die Seitentür (20) unterstützt,
• Eine Montageplatte (3), die auf dem Vorderpfosten (30) und dem Hinterpfosten (40) angeordnet wird, wobei die Befestigungen der Vorderpfosten (30), der Hinterpfosten (40) und der Seitentür (20) verstärkt werden,
• Mindestens ein Befestigungsmittel (4), das die Verriegelungsanordnung (1), den Vorderpfosten (30), Hinterpfosten (40) und die Montageplatte (3) miteinander modular befestigt,
wobei das modulare Verriegelungssystem (A) gekennzeichnet wird, zu umfassen
• Montagezapfen (1.1), die auf der Verriegelungsanordnung (1) angeordnet werden, die mittels Montageschlitzen (31) auf den Vorderpfosten (30) und Montagelöchern (41) auf den Hinterpfosten (40) eingerastet werden, wobei sie die modulare Verriegelungsanordnung an die Vorderpfosten (30) und die Hinterpfosten (40) befestigen.

2. Modulares Verriegelungssystem (A) nach Anspruch 1, wobei ein Träger (1.2) für die Seitentür (20) integriert wird, um sich aufzustützen, nachdem sie geschlossen ist.

3. Modulares Verriegelungssystem (A) nach Anspruch 1, wobei mehrere Montagelöcher (3.1) in verschiedenen geometrischen Formen integriert werden, um die Verriegelungsanordnung (1) an die Montageplatte (3) zu befestigen.

4. Modulares Verriegelungssystem (A) nach Anspruch 1, das Montagezapfen (1.1) in verschiedenen geometrischen Formen integriert.

## Revendications

1. Système de verrouillage modulaire (A) pour une utilisation commune sur des montants antérieurs (30) et des montants postérieurs (40) de remorques, semi-remorques et camions utilisés pour les transports routiers, en éliminant les différences de géométrie des montants entre remorques avec ou sans portes latérales, et comprenant les caractéristiques suivantes :
• un ensemble verrou (1) fixé sur les montants antérieurs (30) et les montants postérieurs (40), le pêne dormant situé sur la porte latérale (20) étant inséré,
• une extension inférieure (2) fixée sur l'ensemble verrou (1) supportant la porte latérale (20),
• une plaque de fixation (3) située sur le montant antérieur (30) et le montant postérieur (40), renforçant les fixations du montant antérieur (30), du montant postérieur (40) et de la porte latérale (20),
• un minimum de une fixation (4) fixant l'ensemble verrou (1), le montant antérieur (30), le montant postérieur (40), et la plaque de fixation (3) entre eux, de façon modulaire,
le système de verrouillage modulaire (A) étant **caractérisé en ce qu'**il comprend
• des pattes de montage (1.1), situées sur l'ensemble verrou (1), et insérées à travers des fentes de montage (31) sur les montants antérieurs (30), et des orifices de montage (41) sur les montants postérieurs (40), assurant la fixation de l'ensemble de verrouillage modulaire sur le montant antérieur (30) et le montant postérieur (40).

2. Système de verrouillage modulaire (A) selon la revendication 1, comprenant un support (1.2) sur lequel vient s'appuyer la porte latérale (20) après sa fermeture.

3. Système de verrouillage modulaire (A) selon la revendication 1, comprenant de multiples orifices de montage (3.1) sous différentes formes géométriques assurant la fixation de l'ensemble verrou (1) sur la plaque de fixation (3).

4. Système de verrouillage modulaire (A) selon la revendication 1, comprenant pattes de montage (1.1) aux différentes formes géométriques.
